# EUROPEAN PATENT APPLICATION

(11) **EP 3 309 232 A1**
(43) Date of publication of application: **18.04.2018**
(21) Application number: 16807379.9
(22) Date of filing: 02.06.2016
(51) Int. Cl.: C09K 3/14, B24B 37/00

(54) **COMPOSITION FOR GLASS AND CERAMIC POLISHING**

(30) Priority: 09.06.2015 JP 2015116812
(71) Applicant: Tayca Corporation, Osaka-shi Osaka 551-0022 (JP)
(72) Inventor: UEDA, Masatoshi, Osaka-shi Osaka 551-0022 (JP); TSURUMURA, Tatsuya, Osaka-shi Osaka 551-0022 (JP)
(74) Representative: Hoffmann Eitle
(86) International application number: PCT/JP2016/066428
(87) International publication number: WO 2016/199672

(57) **Abstract**

[Problem] To provide a composition for glass and ceramic polishing, which has excellent applicability to CMP polishing, while being composed of polishing material particles having a uniform particle size, thereby having no concerns about the occurrence of deformation or change of properties, and which is capable of stably exhibiting excellent polishing characteristics and is not susceptible to polishing scratches, thereby enabling the achievement of a good smooth surface having less surface defects, while being capable of meeting wide polishing conditions from an acidic region to an alkaline region. [Solution] A composition for glass and ceramic polishing, which is characterized by containing, as a polishing material, titanium oxide particles, at least a part of the surfaces of which is covered with silicon dioxide.

## Description

### Technical Field

The present invention relates to a composition for polishing that is used to polish and smooth the surface of a member made of glass or ceramic.

### Background Art

Recent advances in technology relative to electronic equipment have been remarkable, and components or elements to be used have been improved year by year so as to be highly integrated, so as to be reduced in size, and so as to be heightened in responsibility. With these advances, the need to raise the accuracy of microfabrication of such components or elements and to raise the smoothness of a surface to be processed has been increased. For example, in a glass plate that is made of quartz or of a special composition and that is incorporated into a piece of equipment as an element, there are many cases in which targeted optical characteristics cannot be taken out by a general polishing material, such as alumina, when optical characteristics, such as reflection characteristics or transmission characteristics, of its glass are changed by highly smoothing its specific surface. Additionally, for example, when an electrode is formed on a surface of a ceramic element that is used as a capacitor or as a piezoelectric vibrator, there are many cases in which a ceramic surface that has just undergone a burning process does not satisfy smoothness or surface roughness suitable for electrode formation, and therefore the ceramic surface is required to be processed so as to reach a proper surface state by use of some polishing means.

Various techniques exist as a polishing means for such microfabrication or smoothing operation, and particularly a CMP (Chemical Mechanical Polishing) technique has been highlighted recently. The CMP is a technique for increasing a mechanical polishing effect fulfilled by a relative movement between a polishing material and a to-be-polished object and obtaining a smooth polished surface at a high speed by means of a surface chemical action of the polishing material (abrasive particles) itself or by means of the action of chemical components contained in a polishing liquid. A rotary-type polishing apparatus, in which a to-be-polished object held by a carrier is pressed onto a circular surface plate on which a polishing pad is spread while dropping a polishing material slurry and in which the surface plate and the carrier are rotated together and are relatively rotated, is frequently used as a CMP polishing apparatus. Additionally, although the polishing material slurry to be used depends on the to-be-polished object, the polishing material slurry is normally made of water dispersions of microscopic particles (particle diameter: from several tens of nanometers to several hundred nanometers) of colloidal silica, fumed silica, cerium oxide, aluminum oxide, zirconium oxide, or the like, and, if necessary, includes chemical components, such as acids, alkalis, or organic compounds that reform a polishing film, a dispersant, or a surfactant, or the like (Patent Documents 1 to 5).

This CMP technique has been used already and widely in semiconductor-manufacturing process steps, such as flattening of a silicon wafer itself, dividing and forming of shallow trench elements, embedding and flattening of tungsten plugs, flattening of wiring surfaces, and the like. However, according to the CMP, microscopic scratches or processed qualitatively-changed layers are fewer than in polishing performed only by a polishing material, and an ideal smooth surface is regarded as being obtainable, and yet a disadvantageous problem actually resides in the fact that polishing scratches that can be visually perceived with the naked eye are often caused in a polished surface.

Therefore, various polishing materials including polymeric organic particles, such as polystyrene-based resin or acrylic resin, have been proposed as a CMP material to prevent the polishing scratches. For example, in Patent Document 6, water-based dispersions including complex particles consisting of polymeric organic particles and inorganic particles, such as alumina, titania, or silica, are disclosed. Additionally, in Patent Document 7, a polishing material including polymeric organic particles and water in which at least one part of respective surfaces is coated with quadrivalent metallic hydroxide particles, such as rare-earth oxide or zirconium hydroxide, is disclosed. Still additionally, in Patent Document 8, a polishing material including polymeric organic particles and water in which surfaces are coated with metallic oxide particles having a mean particle diameter of 1 nm to 400 nm, such as ceria, silica, alumina, titania, zirconia, or manganese oxide, is disclosed.

### Prior Art Documents

### Patent Literature

Patent Document 1: Japanese Unexamined Patent Application Publication No. H10-321569
Patent Document 2: Japanese Unexamined Patent Application Publication No. H11-188647
Patent Document 3: Japanese Unexamined Patent Application Publication No. 2004-356326
Patent Document 4: Japanese Unexamined Patent Application Publication No. 2005-353681
Patent Document 5: Domestic Re-Publication of PCT International Application No. WO2012/165016
Patent Document 6: Japanese Patent No. 151178
Patent Document 7: Japanese Unexamined Patent Application Publication No. 2005-353681
Patent Document 8: Japanese Unexamined Patent Application Publication No. 2006-41252

### Summary of Invention

### Technical Problem

However, as proposed above (Patent Documents 6 to 8), the CMP material slurry including polymeric organic particles has conventional disadvantages in the fact that it is difficult to obtain polymeric organic particles having a uniform particle size, and the polymeric organic particles are low in hardness, and are easily deformed, and therefore the polishing speed cannot be increased, and polishing conditions are limited because the slurry is unsuitable for use in an alkaline region, and costs for incineration disposal must be paid because it is an organic substance.

In consideration of the foregoing circumstances, it is an object of the present invention to provide a composition for glass and ceramic polishing that has excellent applicability to CMP polishing, that is composed of polishing material particles having a uniform particle size and hence has no concerns about the occurrence of deformation or change of properties, that is capable of stably exhibiting excellent polishing characteristics, that is not liable to make polishing scratches and hence enables the achievement of a good smooth surface having less surface defects, and that is capable of meeting wide polishing conditions from an acidic region to an alkaline region.

### Solution to Problem

To achieve the aforementioned object, a composition for glass and ceramic polishing according to the invention of claim 1 is characterized by including titanium oxide particles that serve as a polishing material and that have respectively surfaces at least one part of which is coated with silicon dioxide.

The invention of claim 2 is configured so that the composition for glass and ceramic polishing according to claim 1 is a water dispersion including the polishing material.

The invention of claim 3 is configured so that a solid content concentration of the water dispersion in the composition for glass and ceramic polishing according to claim 2 is 5 to 40 mass%.

The invention of claim 4 is configured so that, in the composition for glass and ceramic polishing according to any one of claim 1 to claim 3, a ratio of the silicon dioxide with respect to the titanium oxide particles is 10 to 60 mass% in terms of oxide.

The invention of claim 5 is configured so that, in the composition for glass and ceramic polishing according to any one of claim 1 to claim 4, SiO₂/TiO₂ that is a ratio according to X-ray photoelectron spectroscopy of the polishing material is 0.15 or more.

The invention of claim 6 is configured so that, in the composition for glass and ceramic polishing according to any one of claim 1 to claim 5, a mean primary-particle diameter of titanium oxide is 6 to 30 nm.

The invention of claim 7 is configured so that, in the composition for glass and ceramic polishing according to any one of claim 1 to claim 6, a BET specific surface area of the polishing material is 40 to 400 m²/g.

The invention of claim 8 is configured so that, in the composition for glass and ceramic polishing according to any one of claim 1 to claim 7, the surface of the titanium oxide particle is coated with silicon dioxide chemically deposited on the surface.

### Effects of the Invention

The composition for glass and ceramic polishing according to the invention of claim 1 includes titanium oxide particles having respectively surfaces at least one part of which is coated with silicon dioxide as a polishing material, and the composition has excellent applicability to CMP polishing, is capable of stably exhibiting excellent polishing characteristics, is not liable to make polishing scratches, is capable of obtaining a very excellent smooth surface, and is capable of meeting wide polishing conditions from an acidic region to an alkaline region. According to this composition for polishing, it is possible to form a smooth surface having less surface defects without largely cutting down the surface of a to-be-polished object, and therefore, advantageously, optical characteristics will be improved if the to-be-polished object is glass, and an electrode that has been formed on a surface of a ceramic member will be restrained from being separated therefrom if the to-be-polished object is the ceramic member.

According to the invention of claim 2, the composition for polishing is a water dispersion including the polishing material, and hence is usable suitably for a rotary-type CMP polishing apparatus or the like as a polishing material slurry.

According to the invention of claim 3, the water dispersion has a specific solid content concentration, and therefore more excellent polishing characteristics can be obtained.

According to the invention of claim 4, silicon dioxide is provided at a specific ratio with respect to the titanium oxide particles, and therefore higher polishing performance can be reliably fulfilled.

According to the invention of claim 5, the surface of the titanium oxide particle is sufficiently coated with silicon dioxide, and therefore it is more difficult to make polishing scratches, and high polishing performance can be reliably fulfilled.

According to the invention of claim 6, the titanium oxide of the polishing material has a specific primary-particle diameter, and therefore excellent polishing characteristics can be obtained, and the restraint effect of polishing scratches is made higher.

According to the invention of claim 7, the BET specific surface area of the polishing material falls within a specific range, and therefore more excellent polishing characteristics can be obtained, and the restraint effect of polishing scratches is made even higher.

According to the invention of claim 8, the surface of the titanium oxide particle of the polishing material is coated with silicon dioxide chemically deposited on the surface, and therefore silicon dioxide maintains a stable coating state on the surface of the titanium oxide particle even during polishing, and agglomerated particles of silicon dioxide particles are never generated like a mere mixture of titanium oxide particles and silicon dioxide particles, whereas agglomerated particles of the titanium oxide particles are easily loosened and are liable to be re-dispersed because the titanium oxide particle itself has its surface coated with silicon dioxide, and therefore it is possible to fulfill very excellent polishing performance.

### Brief Description of Drawings

[FIG. 1] FIG. 1 is an optical photomicrographic view of not-yet polished surfaces of glass samples (a) and (b) that are to-be polished objects.
[FIG. 2] FIG. 2 is an optical photomicrographic view of the surfaces of the glass samples (a) and (b) that have been polished by a polishing material slurry of titanium oxide particles coated with silicon oxide.
[FIG. 3] FIG. 3 is an optical photomicrographic view of the surfaces of the glass samples (a) and (b) that have been polished by a polishing material slurry of titanium oxide particles coated with cerium oxide.
[FIG. 4] FIG. 4 is an optical photomicrographic view of the surfaces of the glass samples (a) and (b) that have been polished by a polishing material slurry of titanium oxide particles coated with zirconium oxide.
[FIG. 5] FIG. 5 is an optical photomicrographic view of the surfaces of the glass samples (a) and (b) that have been polished by a polishing material slurry of pigment-grade titanium oxide particles.
[FIG. 6] FIG. 6 is an optical photomicrographic view of the surfaces of the glass samples (a) and (b) that have been polished by a polishing material slurry of cerium oxide particles.
[FIG. 7] FIG. 7 is an optical photomicrographic view of the surfaces of the glass samples (a) and (b) that have been polished in a case in which dried colloidal silica has been mixed during polishing by use of a polishing material slurry of colloidal silica.
[FIG. 8] FIG. 8 is an optical photomicrographic view of the surfaces of the glass samples (a) and (b) that have been polished in a case in which dried titanium oxide particles coated with silicon oxide have been mixed during polishing by use of a polishing material slurry of titanium oxide particles coated with silicon oxide.

### Description of Embodiments

A composition for glass and ceramic polishing of the present invention includes titanium oxide particles in which at least one part of respective surfaces is coated with silicon dioxide (hereinafter, referred to abbreviatedly as "titanium oxide particles coated with silicon dioxide") as a polishing material as described above, and, in normal cases, is usable suitably for a rotary-type CMP polishing apparatus or the like as a water dispersion including the polishing material, i.e., as a slurry form, and is usable in the form of the polishing material alone or in a powdery form composed chiefly of the polishing material, which depends on a to-be-polished object or depends on a polishing method.

The titanium oxide particles coated with silicon dioxide mentioned above are not a mixture of titanium oxide particles and silicon dioxide particles but particles characterized by using a titanium oxide particle as a core and by having a coating layer of silicon dioxide on the surface of the core particle.

Although there are various methods to obtain the thus-formed titanium oxide particles coated with silicon dioxide, it is recommended to employ a means for coating the surface of a titanium oxide particle serving as a core by chemically depositing silicon dioxide. Methods disclosed by, for example, Japanese Patent No. 4296529, Japanese Unexamined Patent Application Publication No. 2006-83033, Japanese Unexamined Patent Application Publication No. 2008-69193, and Japanese Patent No. 5158078 can be suitably employed as the means to be coated with silicon dioxide by chemical deposition.

Although specific limitations are not imposed on a titanium oxide particle that serves as a core of a polishing material, the mean particle size of a primary particle falling within the range of 6 to 30 nm, more preferably 6 to 20 nm, is suitable, and the polishing speed will be decreased if the mean particle size is too small, whereas the smoothness of a polished surface will be lowered and polishing scratches will easily occur if the mean particle size is too large. Additionally, although a rutile type (tetragonal) and an anatase type (tetragonal) can be mentioned as a typical crystal form of titanium oxide, either of the crystal forms will be allowed to be employed.

Although specific limitations are not imposed on the ratio of silicon dioxide with respect to titanium oxide particles, the ratio thereof falls within the range of, preferably, 10 to 60 mass% in terms of oxide, and if the ratio is too low, polishing scratches will easily occur in a polished surface, and if it is too high, polishing scratches will likewise easily occur in the polished surface when dried powder is mixed therewith. With respect to titanium oxide particles coated with silicon dioxide, the entire surface of a titanium oxide particle is not necessarily required to be coated with silicon dioxide, and a part of the surface of the titanium oxide particle may be in an exposed state, and the ratio SiO₂/TiO₂ according to X-ray photoelectron spectroscopy is, preferably, 0.15 or more, and if this ratio is too low, a polishing-scratch preventing effect cannot be sufficiently fulfilled because of a shortage of coating by use of silicon dioxide.

Additionally, the BET specific surface area of a polishing material including titanium oxide particles coated with silicon dioxide falls within the range of, preferably, 40 to 400 m²/g, and, more preferably, 40 to 130 m²/g, and is recommended to fall particularly within the range of 60 to 110 m²/g, and, disadvantageously, polishing scratches will easily occur if the specific surface area thereof is too small, whereas the polishing material cannot maintain its uniformly dispersed state if it is too large.

If a composition for polishing is a water dispersion including the aforementioned polishing material, its solid content concentration falls within the range of, preferably, 5 to 40 mass%, and is recommended to fall particularly within the range of 25 to 35 mass%, and polishing efficiency will be lowered if the concentration is too low. In contrast, if the solid content concentration is too high, a polishing material cannot maintain its uniformly dispersed state, and it becomes difficult to use the polishing material particularly for CMP polishing, and it also becomes difficult to handle it because of an increase in viscosity. The water dispersion is recommended to be alkaline, and it is more preferable to have pH 8 to 12 because this pH level enables the polishing material to excellently maintain its uniformly dispersed state. A preferable solid content concentration or preferable pH mentioned here is the range of numerical values when the water dispersion is used for polishing, and, in order to decrease its volume when it is transported or stored, it is permissible to prepare it as a water dispersion having a comparatively high concentration (high pH) when it is commercialized and to dilute it when polishing is performed.

In order to prepare a composition for polishing that consists of the thus formed water dispersion, it is recommended to mix the polishing material with water at a desired compounding ratio and to disperse it so as to be a suspension. Various existing methods, such as an agitating method by use of a wing-type agitator or an ultrasonic dispersing method, can be employed as the dispersing/mixing means. Additionally, when the water dispersion is prepared, various additives conventionally known as a polishing material slurry can be added if needed, for example, in order to hold or stabilize the quality of a product or in order to meet the kind of a to-be-polished object or polishing conditions.

The following additives (i) to (vi) can be mentioned as suitable examples of the additives.
(i) celluloses, such as cellulose, carboxymethylcellulose, and hydroxymethylcellulose, (ii) water-soluble alcohols, such as ethanol, propanol, and ethylene glycol, (iii) surfactants, such as sodium alkylbenzene sulfonate and naphthalenesulfonic acid-formalin condensate, (iv) organic polyanionic substances, such as lignosulfonic acid salt and polyacrylic acid salt, (v) water-soluble polymers (emulsifying agents), such as polyvinyl alcohol, (vi) chelating agents, such as dimethylglyoxime, dithizone, oxine, acetylacetone, glycine, EDTA, and NTA.

On the other hand, in the composition for polishing according to the present invention, other various inorganic particles that serve as a polishing accelerant or as an anti-settling agent, or other agents may be compounded together with titanium oxide particles coated with silicon dioxide that serve as a polishing material.

The thus arranged composition for glass and ceramic polishing includes titanium oxide particles coated with silicon dioxide as a polishing material, and therefore the composition has excellent applicability to CMP polishing, is capable of stably exhibiting excellent polishing characteristics, is not liable to make polishing scratches, is capable of obtaining a very excellent smooth surface, and is capable of meeting wide polishing conditions from an acidic region to an alkaline region. Additionally, according to this composition for polishing, it is possible to form a smooth surface having less surface defects without largely cutting down the surface of a to-be-polished object, and therefore, advantageously, optical characteristics will be improved if the to-be-polished object is glass, and an electrode that has been formed on a surface of a ceramic member will be restrained from being separated therefrom if the to-be-polished object is the ceramic member. In the composition for polishing of the present invention, it has also been proved that, even if dried powder of a polishing material adhering to surroundings is mixed therewith during the polishing of the to-be-polished object, the dried powder mixed therewith will not easily lead to the increase of polishing scratches when the composition is given as a water dispersion (slurry) for polishing.

With respect to the reason why the composition is capable of stably exhibiting excellent polishing characteristics and why the composition is not liable to make polishing scratches as mentioned above, a detailed operational mechanism thereof is not clear, and yet titanium oxide particles that serve as the core of polishing material particles are uniform in particle size and have no concerns about the occurrence of a change in properties or of deformation, and, in addition, the titanium oxide particle is lower in hardness than silicon dioxide with which its surface is coated, and therefore it is presumed that the titanium oxide particles itself function as a buffer layer that absorbs a contiguously-pressing reaction force from a polished surface during polishing, hence making it possible to prevent the occurrence of polishing scratches. It should be noted that it has been proved that, if a coating object is other metallic oxides, such as cerium oxide or zirconium oxide, polishing scratches will extremely often occur as shown by polishing results of comparative examples described later even if the polishing material likewise uses titanium oxide particles as core particles. Therefore, it is conceivable that a combination of core particles of titanium oxide and a coating object of silicon dioxide will have a great aptitude by the action of some peculiar factor although this has not yet been clarified.

Additionally, the surface of the titanium oxide particle of the polishing material is coated with silicon dioxide chemically deposited on the surface, and therefore the silicon dioxide maintains a stable coating state on the surface of the titanium oxide particle even during polishing, and agglomerated particles of silicon dioxide particles are never generated like a mere mixture of titanium oxide particles and silicon dioxide particles, whereas agglomerated particles of the titanium oxide particles are easily loosened and are liable to be re-dispersed because the titanium oxide particle itself has its surface coated with silicon dioxide, and therefore it is possible to fulfill very excellent polishing performance.

The composition for glass and ceramic polishing of the present invention is also applicable to various polishing methods other than CMP polishing, and is usable in a powdery form without using the polishing material as a water dispersion.

### Embodiments

Although embodiments of the present invention will be hereinafter described in detail in comparison with comparative examples, the present invention is not limited to these embodiments. In the following description, "%" denotes "mass%," and "part" denotes "part by mass." The crystal form and the mean primary-particle diameter of each polishing material were examined by X-ray diffraction, and the pH of a water dispersion was examined by a measurement method based on JIS Z 8802.

### Embodiment 1

Rutile type fine-particulate titanium dioxide (Trade name made by TAYCA CORPORATION: MT-100WP ... the ratio of silicon dioxide with respect to titanium oxide is 43%), in which the surface of a titanium oxide particle having a mean primary-particle diameter of 15 nm is coated with silicon dioxide chemically deposited on the surface, was dispersed into water by means of a bead mill, and a water dispersion whose solid content concentration is 30% and whose pH is 10.0 was obtained. Part of this dispersion liquid was gathered and dried, and titanium oxide particles coated with silicon oxide that had been dried underwent a surface analysis according to XPS (X-ray photoelectron spectroscopy), and, as a result, SiO₂/TiO₂ was 70/30.

### Embodiment 2

According to a method based on Japanese Patent No. 4296529, anatase type fine-particulate titanium dioxide (the ratio of silicon dioxide with respect to titanium oxide is 15%), in which the surface of a titanium dioxide particle having a mean primary-particle diameter of 6 nm is coated with silicon dioxide chemically deposited on the surface, was burned at 700°C so as to have a mean primary-particle diameter of 20 nm, and was dispersed into water by means of a bead mill, and a water dispersion whose solid content concentration is 30% and whose pH is 2.4 was obtained. Part of this dispersion liquid was gathered and dried, and titanium dioxide particles coated with silicon oxide that had been dried underwent a surface analysis according to XPS (X-ray photoelectron spectroscopy), and, as a result, SiO₂/TiO₂ was 16/84.

### Embodiment 3

According to a method based on Japanese Patent No. 4296529, anatase type fine-particulate titanium dioxide (the ratio of silicon dioxide with respect to titanium oxide is 10%), in which the surface of a titanium dioxide particle having a mean primary-particle diameter of 6 nm is coated with silicon dioxide chemically deposited on the surface, was dispersed into water by means of a bead mill, and a water dispersion whose solid content concentration is 5% and whose pH is 11.0 was obtained. Part of this dispersion liquid was gathered and dried, and titanium dioxide particles coated with silicon oxide that has been dried underwent a surface analysis according to XPS (X-ray photoelectron spectroscopy), and, as a result, SiO₂/TiO₂ was 20/80.

### Comparative Example 1

An aqueous titanyl sulfate solution (80 parts in term of TiO₂) and an aqueous cerium nitrate solution (20 parts in term of CeO₂) were mixed together, and were neutralized to pH 7 by use of 24% aqueous ammonia. A slurry that has been neutralized was filtered by a Nutsche filter, and was washed, and was dried at 120°C, and then was burned at 600°C, and was smashed by a hammer mill, and anatase type fine-particulate titanium dioxide that has a mean primary-particle diameter of 14 nm and that is partially coated with cerium oxide was produced. Thereafter, the resulting product was dispersed into water by means of a bead mill, and a water dispersion whose solid content concentration is 30% and whose pH is 6.2 was obtained.

### Comparative Example 2

An aqueous titanyl sulfate solution (90 parts in term of TiO₂) and an aqueous zirconium sulfate solution (10 parts in term of ZrO₂) were mixed together, and were neutralized to pH 7 by use of 24% aqueous ammonia. A slurry that has been neutralized was filtered by a Nutsche filter, and was washed, and was dried at 120°C, and then was burned at 800°C, and was smashed by a hammer mill, and anatase type fine-particulate titanium dioxide that has a mean primary-particle diameter of 20 nm and that is partially coated with zirconium oxide was produced. Thereafter, the resulting product was dispersed into water by means of a bead mill, and a water dispersion whose solid content concentration is 30% and whose pH is 7.5 was obtained.

### Comparative Example 3

A water dispersion, whose pH is 5.9 and whose solid content concentration is 30%, of pigment-grade titanium dioxide particles having a mean primary-particle diameter of 180 nm (Trade name made by TAYCA CORPORATION: TITANIX JA-3 ... anatase type) was prepared.

### Comparative Example 4

A water dispersion, whose pH is 8.4 and whose solid content concentration is 30%, of a commercially-available cerium oxide-based polishing material [Trade name made by Showa Denko K.K.: SHOROX NX23(T), CeO₂ is 60%, and La₂O₃ is 30% according to a fluorescent X-ray analysis] was prepared.

### Comparative Example 5

A water dispersion, whose pH is 9.8 and whose solid content conversion concentration is 30%, of commercially-available colloidal silica (Trade name made by Nissan Chemical Industries, Ltd.: SNOWTEX 30, the mean primary-particle diameter is 15 nm) was prepared.

### [Polishing Test 1]

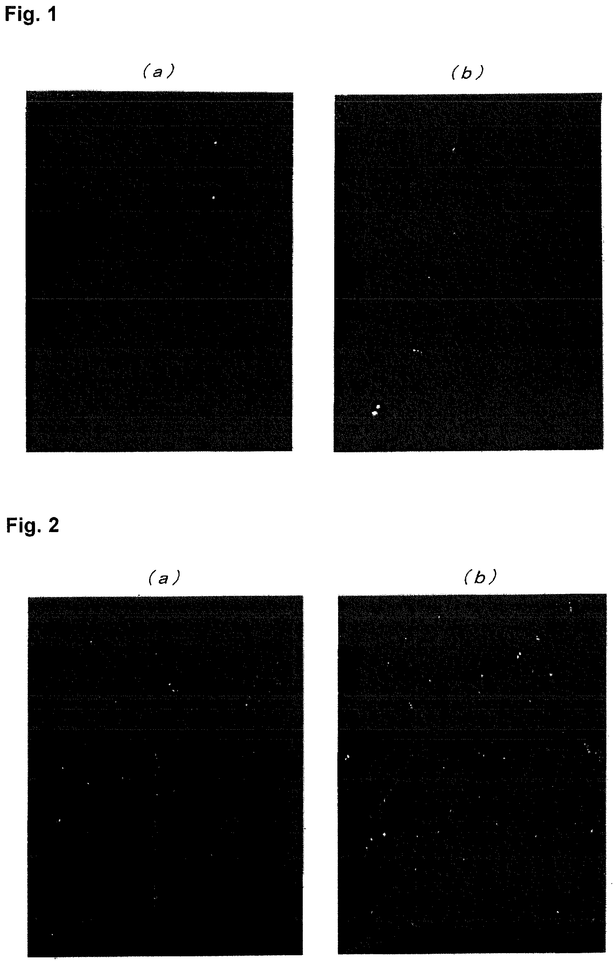

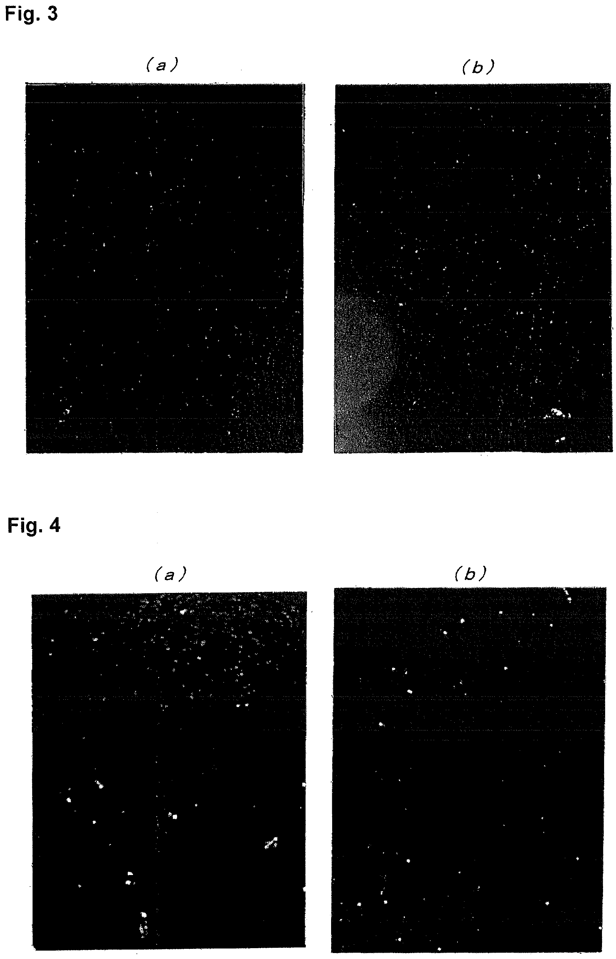

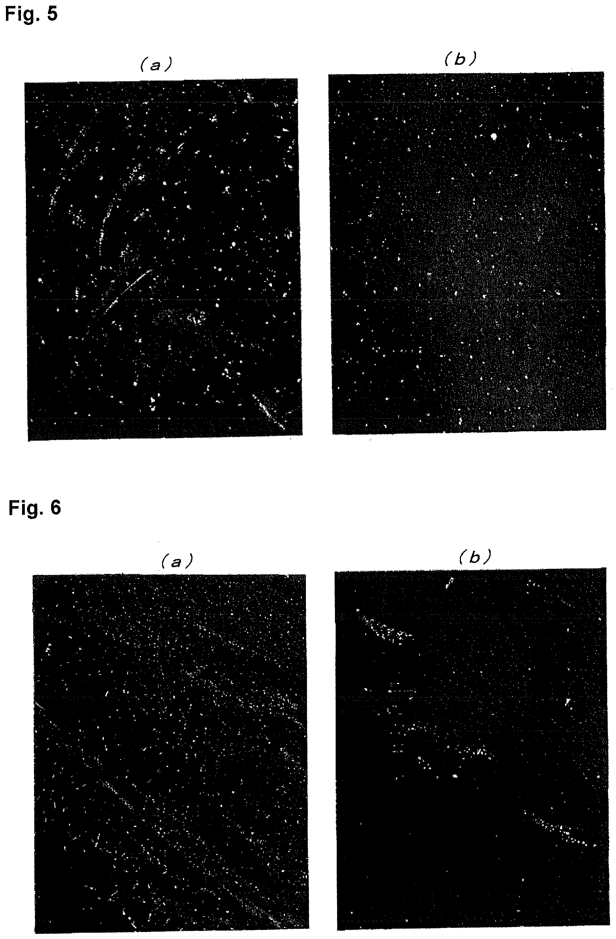

Each water dispersion of Embodiments 1 to 3 and of Comparative Examples 1 to 4 was used as a polishing material slurry, and CMP polishing tests of glass were performed under the following conditions. Polishing rates and the number of polishing scratches that have occurred in the polishing tests were measured, and results obtained here are shown in Table 1 below along with specific surface areas obtained according to a BET single-point method. With respect to two pieces of glass (a) and (b) each of which is a to-be-polished object, a photomicrograph (34-fold magnification; the same applies hereinafter) of a surface of each piece of glass that has not yet been polished is shown in FIG. 1, and a photomicrograph of the surface thereof that has been polished by the polishing material slurry of Embodiment 1 is shown in FIG. 2, and a photomicrograph of the surface thereof that has been polished by the polishing material slurry of Comparative Example 1 is shown in FIG. 3, and a photomicrograph of the surface thereof that has been polished by the polishing material slurry of Comparative Example 2 is shown in FIG. 4, and a photomicrograph of the surface thereof that has been polished by the polishing material slurry of Comparative Example 3 is shown in FIG. 5, and a photomicrograph of the surface thereof that has been polished by the polishing material slurry of Comparative Example 4 is shown in FIG. 6. With respect to the polishing rate, the thickness of the piece of glass that has been polished was measured by a micrometer, and an average value among three pieces of glass was calculated. Additionally, with respect to the number of polishing scratches, the number of scratches in the visual field found by photographing a glass surface that has been polished at 34-fold magnification was counted, and was shown as an average value of count numbers of three visual fields per sample, and, if the number thereof is too large to count, it was regarded as 1000<.

### <Polishing Conditions>

Polishing apparatus: CMP Double Side Polisher 2B-9P made by SpeedFam Company Limited
Load: 2 kg
Slurry concentration: 5 to 30%
Slurry input: 200 ml/minute
Revolutions of lower plate: 40 rpm
Polishing time: 30 minutes
Pad used: Polyurethane pad (Trade name made by Nitta Haas Incorporated: POLITEX Pad)
Glass sample to be polished: General plate glass, 30 mm in diameter, 5 mm in thickness.

**[Table 1]**

| Polishing material slurry | Polishing material particles | Specific surface area (m²/g) | Polishing rate (mm/minute) | Polishing scratch (scratches/10 4 cm²) |
|---|---|---|---|---|
| Embodiment 1 | TiO₂ coated with SiO₂ | 60 | 0.07 | 210 |
| Embodiment 2 | TiO₂ coated with SiO₂ | 110 | 0.10 | 72 |
| Embodiment 3 | TiO₂ coated with SiO₂ | 319 | 0.06 | 54 |
| Comparative Example 1 | TiO₂ coated with CeO₂ | 75 | 0.31 | 1000< |
| Comparative Example 2 | TiO₂ coated with ZrO₂ | 54 | 0.03 | 1000< |
| Comparative Example 3 | Pigment-grade TiO₂ | 12 | 0.26 | 1000< |
| Comparative Example 4 | Commercially-available CeO₂ | 20 | 0.57 | 1000< |
| Not-yet-polished glass | | | | 37 |

As is obvious from the results of Table 1 and the photomicrographs of (a) and (b) of FIG. 2, an excellent polished surface having less polishing scratches is obtained in CMP glass polishing that uses the water dispersion of titanium oxide particles coated with silicon dioxide of the present invention as a polishing material slurry. On the other hand, in CMP glass polishing that uses the water dispersion of pigment-grade titanium dioxide particles (Comparative Example 3) or the water dispersion of commercially-available cerium oxide particles (Comparative Example 4) as a polishing material slurry, it is understood that many polishing scratches occur in the polished surface although a comparatively high polishing speed is obtained. Additionally, even if core particles are titanium dioxide particles, it is understood that many polishing scratches likewise occur in the polished surface when a polishing material slurry of titanium dioxide particles that are coated with cerium oxide (Comparative Example 1) or coated with zirconium oxide (Comparative Example 2) is used.

### [Polishing Test 2]

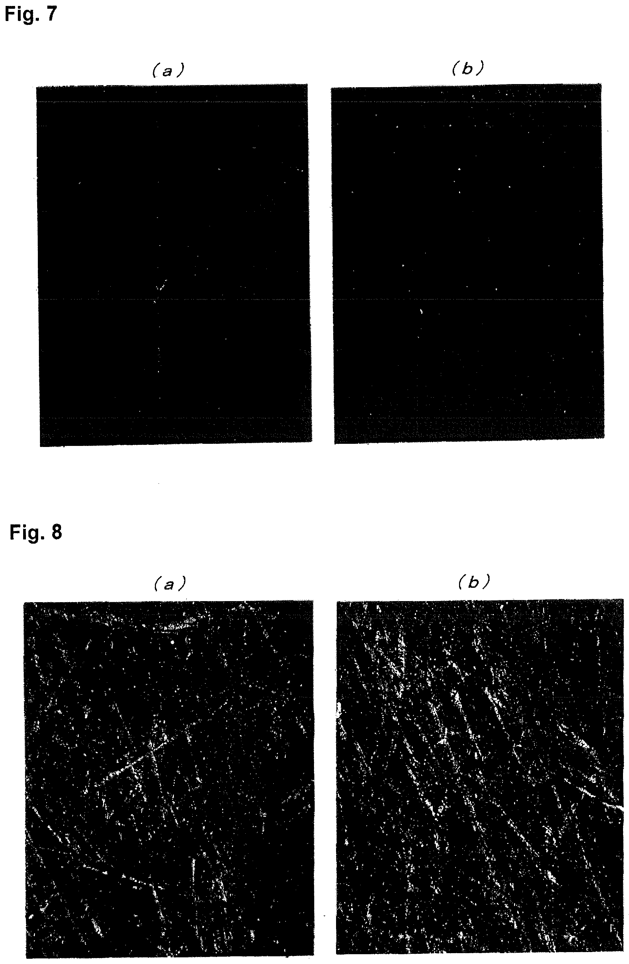

Each water dispersion of Embodiment 1 and of Comparative Example 5 was used as a polishing material slurry, and dried powder that has been dried at normal temperature was mixed by 1%, and a CMP glass polishing test was performed under the same polishing conditions as in Polishing Test 1 mentioned above. As a result, the number of polishing scratches on the glass surface that has been polished by the polishing material slurry of Embodiment 1 was 220 scratches/104 cm² as an average value of count numbers of three visual fields, whereas the number of polishing scratches on the glass surface that has been polished by a polishing material slurry from the water dispersion of colloidal silica of Comparative Example 5 was 1000 scratches/104 cm² or more as an average value thereof. With respect to the two pieces of glass (a) and (b) used in Polishing Test 2 here, a photomicrograph of the surface that has been polished by the polishing material slurry of Embodiment 1 is shown in FIG. 7, and a photomicrograph of the surface that has been polished by the polishing material slurry of Comparative Example 5 is shown in FIG. 8. From a comparison between FIG. 7 and FIG. 8, it is obvious that, if dried powder of a polishing material is mixed during polishing, the number of polishing scratches increases when the polishing material is commercially-available colloidal silica whereas the number of polishing scratches is not liable to lead to an increase when the polishing material is the composition for polishing of the present invention.

## Claims

1. A composition for glass and ceramic polishing, **characterized by** including titanium oxide particles that serve as a polishing material and that have respectively surfaces at least one part of which is coated with silicon dioxide.

2. The composition for glass and ceramic polishing according to claim 1, the composition being a water dispersion including the polishing material.

3. The composition for glass and ceramic polishing according to claim 2, wherein a solid content concentration of the water dispersion is 5 to 40 mass%.

4. The composition for glass and ceramic polishing according to any one of claim 1 to claim 3, wherein a ratio of the silicon dioxide with respect to the titanium oxide particles of the polishing material is 10 to 60 mass% in terms of oxide.

5. The composition for glass and ceramic polishing according to any one of claim 1 to claim 4, wherein SiO₂/TiO₂ that is a ratio according to X-ray photoelectron spectroscopy of the polishing material is 0.15 or more.

6. The composition for glass and ceramic polishing according to any one of claim 1 to claim 5, wherein a mean primary-particle diameter of titanium oxide is 6 to 30 nm.

7. The composition for glass and ceramic polishing according to any one of claim 1 to claim 6, wherein a BET specific surface area of the polishing material is 40 to 400 m²/g.

8. The composition for glass and ceramic polishing according to any one of claim 1 to claim 7, wherein the surface of the titanium oxide particle is coated with silicon dioxide chemically deposited on the surface.
